# EUROPEAN PATENT SPECIFICATION

(11) **EP 3 439 519 B1**
(45) Date of publication and mention of the grant of the patent: **18.03.2020**
(21) Application number: 16715508.4
(22) Date of filing: 07.04.2016
(51) Int. Cl.: A47J 37/07, A47G 7/06

(54) **MODULAR POT, IN PARTICULAR FIRE POT OR DECO POT, AND ASSEMBLY KIT FOR ASSEMBLING SUCH A MODULAR POT**
MODULARER TOPF, INSBESONDERE FEUERTOPF ODER DEKOTOPF, UND BAUSATZ ZUM ZUSAMMENBAU SOLCH EINES MODULAREN TOPFS
POT MODULAIRE, EN PARTICULIER CREUSET OU POT DÉCORATIF ET KIT D'ASSEMBLAGE PERMETTANT D'ASSEMBLER UN TEL POT MODULAIRE

(43) Date of publication of application: 13.02.2019
(73) Proprietor: Husqvarna AB, 561 82 Huskvarna (SE)
(72) Inventor: BÜLLESBACH, Sven, 89359 Kötz (DE); HEINRICH, Armin, 89415 Lauingen (DE); SCHUSTER, Johann, 89522 Heidenheim (DE); MACK, Alexander, 89568 Hermaringen (DE)
(74) Representative: Finkele, Rolf
(86) International application number: PCT/EP2016/057621
(87) International publication number: WO 2017/174137

(56) References cited:
- EP-A1- 0 061 617
- DE-U1-202012 001 233
- GB-A- 2 461 402
- US-A- 6 018 908
- US-A1- 2015 056 886

## Description

The underlying invention is related to a modular pot, in particular fire, grill, or deco pot, and an assembly kit for assembling such a modular pot.

Conventional fire pots or fire bowls are comparatively heavy-weighted, and mostly in the shape of a shell or bowl requiring quite a lot of storing space in times of non-use. A further drawback is, that conventional fire bowls, and also corresponding deco bowls or pots, are comparatively bulky.

In view of this, it is an object of the present invention to remove the above drawbacks.

In particular, a modular pot, in particular fire, grill, or deco pot, and an assembly kit for assembling such a modular pot shall be provided, wherein the modular pot shall enable comparatively easy storage, assembly and disassembly.

A yet further aspect may be to provide a modular pot and corresponding kit, requiring low storage space, while at the same time enabling a variety of possible fields of application.

This object is solved by the features of the independent claims. Embodiments result from the dependent claims and, beyond that, from the following description, in particular comprising various embodiments as covered and described in the annexed claims.

The skilled person will understand that any embodiment described in the following description is covered and comprised by the subject matter covered by the annexed claims.

The embodiments, features and combination of features as described herein in connection with the invention, as well as the combination of features as given in the annexed claims, but also any combination of features as mentioned and described in connection with the embodiments shall be considered as being disclosed herein, at least, however, shall be considered to be derivable by the skilled person.

In particular, each feature and each combination of features in the embodiments as described herein may for example be claimed in a different combination, at least because the skilled person will recognize that each and every combination of the features mentioned herein is suitable for contributing to the underlying problem.

Further, each feature and each combination of features in the claims and used in the description below may be used and claimed independently from the respective claimed subject matter and independently from claim dependencies and back-references, for example in an arbitrary combination of features selected from one or more claims, one or more embodiments as set forth herein below and/or from the annexed figures.

In an embodiment of the invention, in particular according to claim 1, a modular pot, in particular fire, grill, or deco pot, is provided.

In a further embodiment of the invention, in particular according to claim 15, an assembly kit, in particular comprising components, for assembling a modular pot is provided.

Preferred embodiments of the invention will be described in connection with further embodiments as described in more detail below.

In an embodiment of the invention, a modular pot may be provided that comprises at least three partitions inter-connectable with each other by slide-locking connections, which may for example be implemented as hook-and-slot interlocks, in which one or more hooks, such as a pair of hooks, may be provided and shaped such that they can be engaged into counterpart slots, which may be two-sided closed slots or one-sided open slots.

The partitions in embodiments may have substantially the same basic shape, i.e. a common basic shape. Preferably but not necessary the partitions may have a planar shape, i.e. they may be implemented in a flat-sheet shape.

The partitions, i.e. one or more of the partitions, may be made for example from metal or plastic, in a sheet-metal or sheet-plastic type design. In case of a fire or grill pot, the partitions may be made from metal, in particular sheet-metal, such as from stainless steel and the like. In case of a deco pot, e.g. a plant pot or the like, the partitions, or at least one of them, may be made from plastic, e.g. sheet-plastic.

In preferred embodiments, the modular pot comprises at least three, in further preferred embodiments exactly three partitions having the properties as set forth below. Providing exactly three partitions on the one hand is aimed at enabling an assembly kit having a small number of parts facilitating assembly and disassembly, reducing storage, and/or facilitating moving the pot between different locations.

Each partition may comprise a slide-locking male interface having one or more, such as for example one, two or three or more, male hook-laps, e.g. locking hooks.

Further, each partition may comprise a slide-locking female interface having one or more counterpart female locking slots for locking hook-laps, e.g. provided on a particular one of the one or more partitions, therein in a slide-to-lock movement.

The male and female interfaces may for example be implemented in such a way, that each male interface on one of the partitions has a counterpart female interface implemented on a, i.e. a particular one, of the other partitions. The male and female interfaces may be implemented such that they pairwise match with each other.

With each partition, the one or more hook-laps of the male interface may be arranged along and define a respective first locking axis, and the one or more slots of each female interface may be arranged along and define a respective second locking axis. The locking axis may be defined to be parallel to an axis of movement required for connecting the corresponding interface to a counterpart interface in a slide-to-lock or slide-to-unlock movement.

The arrangement of the hook-laps and slots on each partition may be such that the first and second locking axis of each partition are non-parallel and may have or define a common point of intersection.

A common point of intersection in particular shall be understood to lie on a straight line defined as the line of intersection between two planes running parallel to the surface normal of the basic shape of a corresponding partition, one of the planes adhering to the male interface and the other one of the planes adhering to the female interface. In other words and from the perspective of a plan, i.e. top, view of the partitions as regards the basic shape, the first and second locking axis may be considered as having a common point of intersection, if the first and second locking axis in the plan view projection intersect with each other.

As regards the common point of intersection, the interfaces of the partitions may be implemented such that hook-openings of the hook-laps of the male interface of one of the partitions may be oriented towards the associated point of intersection, i.e. the point of intersection defined by the one partition, whereas hook-openings of the hook-laps of the male interfaces of the other partitions may be oriented away from their associated point of intersection, i.e. the point of intersection defined by the respective other partition.

This means, that with one of the partitions, the hook-openings of the hook-laps of the male interface are oriented towards, i.e. face, the point of intersection defined by the first and second locking axis of that partition. With each of the other partitions, the hook-openings may be oriented away from, i.e. averted, from the point of intersection of the corresponding partitions.

As the male and female locking interfaces may be arranged in a slanted manner to each other, the hook-openings of the one particular partition may be oriented towards a plane that is perpendicular to the partition, i.e. parallel to the surface normal of the partition, and that comprises, i.e. runs through a center axis of the female interface.

The term locking axis, in particular shall be understood as being defined by an axis running through the corresponding male or female interface, e.g. a center axis of the corresponding interface, and having a direction corresponding to a vector of movement required for interlocking a respective male or female interface with a counterpart female or male interface.

For example, if the male and female interfaces are implemented as hook-and-slot interfaces having hooks and longitudinal slots as counterpart locking elements, the hooks may for example be pushed in a direction parallel to the longitudinal to the slots, which direction aligns and defines the locking axis the involved interfaces.

The specific way of providing the hook-laps and hook-openings has been observed in connection with the underlying invention to enable comparatively easy assembly of the partitions. In particular, it is possible to avoid that during assembly the first couple of partitions set together fall apart when mounting the last one of the partitions.

Further, the specific orientation of the hook-openings is able to mesh and interlock the partitions when fully assembled, such that, for example, it may be avoided that the fully assembled partitions fall apart when slightly moved or moved from one place to another.

In embodiments, the male and female interfaces of each of the partitions may be configured such that each male interface of one of the partitions is assigned for being interlocked with a particular female interface of one of the remaining partitions of the plurality of partitions.

The male and female interfaces may be implemented such that the partitions as including the basic shape and the male and female interfaces have an overall planar, sheet-type shape, which in particular allows easy and space-saving storage of the pot in the disassembled state.

Further, the male hook-laps in embodiments may project from a face side, i.e. peripheral edge, of the associated partition. In embodiments, the male hook-laps may be implemented in coplanar arrangement with the associated partition.

The female locking slots may in embodiments be implemented as longitudinal slots running essentially parallel to the second locking axis, i.e. as having a longitudinal extension that is parallel to the second locking axis. The one or more of the female locking slots may be implemented as two-sided closed slots. Further, one or more of the female locking slots may be implemented as one-sided open slots.

In embodiments, each female locking interface may comprise one or more, in particular exactly one, one-sided open locking slots, and one or more, in particular exactly one, two-sided closed locking slots.

The above and below described arrangement and implementation of the hooks and slots may be useful for enabling easy assembly of the partitions, whilst obtaining favourable interlock between the partitions, in particular during assembly.

In embodiments, the slide-locking interfaces of one or more of the partitions, for example of all of the partitions, may be implemented such that, for each of the one or more partitions, the point of intersection lies on the edge of or within the circumference of the corresponding partition, e.g. on the edge of or within the circumference of the basic shape, i.e. form, of the partition. Here, an arrangement of the male and female interfaces may be obtained that has advantageous interlocking properties.

In embodiments, an intermediate angle between the second locking axis and the first locking axis, with regard to a plan view in which the male locking interface is located on the left-hand side, i.e. in which the female locking interface is correspondingly located at the right-hand side, and a right-handed coordinate system as a reference, lies within the range of 30° to 120, in particular at about 90°.

With such angles, adequate stability and interlocking engagement may be obtained whilst allowing reasonable sizes of the modular pot for use as fire, grill, plant pot, or rack for potted plants, for example.

In embodiments, with the one partition that comprises hook-laps with hook-openings oriented towards the associated point of intersection, one particular male hook-lap of the male hoop-laps that is located next to, in particular closest to, the associated point of intersection may have an hook-lap opening angle of about 15° to 80°, preferably of about 45° or 60°. The hook-lap opening angle may for example have half the size of the intermediate angle.

In embodiments, with the one partition that comprises hook-laps with hook-openings oriented towards the associated point of intersection, one particular female locking slot of the female locking slots that is located next to, in particular closest to, the associated point of intersection may be a one-sided open slot having a slot opening facing the associated point of intersection and having a slot opening angle of about 15° to 80°, preferably of about 45° or 60°. The slot opening angle may for example have half the size of the intermediate angle.

As regards the above-identified hook-lap opening angles and slot opening angles, such angles provided with at least one of the hook-laps and/or slots has been turned out to enable comparatively simple assembly whilst providing adequate interlocking between the partitions in the assembled state.

In embodiments, the hook-lap opening angle and the slot opening angle may essentially the same absolute values. Further, the particular male hook-lap and particular female locking slot may in embodiments, be arranged symmetrically with respect to the bisector of the intermediate angle.

In further embodiments, the particular male hook-lap and particular female locking slot may have a symmetrical design with respect to the bisector. The bisector may for example coincide with the (geometrical) bisector between the male and female interface of a corresponding partition.

Also, the above technical designs of the particular male hook-lap and particular female locking slot have been found out in connection with the invention to enable easy assembly whilst providing safe engagement between the partitions in the assembled state.

In embodiments, with the partition associated with the particular hook-lap and particular locking slot as mentioned above, a particular section of the partition may extend into the space between the particular hook-lap and particular locking slot.

This particular section may have a triangular shape, and may further be arranged symmetrically between the particular hook-lap and particular locking slot.

In embodiments, an apex of the particular section, in particular triangular shaped particular section, may coincide with, i.e. substantially be identical to, the point of intersection.

For example, the particular hook-lap and particular locking slot may comprise a leg projecting form the base body of the partition, i.e. from the basic shape, such that these legs and the above-identified particular section of the partition define a contour having the shape of an M.

Such technical designs may for example be advantageous for configurations comprising exactly three partitions, wherein the particular section is suitable for obtaining a closed pot bottom in the assembled state.

In embodiments, at least one of the particular hook-lap and particular locking slot may be implemented and defined as a pin-like projection, for example as a leg as mentioned above, projecting from the associated male or female locking interface, for example such that an overall planar shape of the partition with respect to a plan view may be obtained.

The pin-like projections may extend in parallel to the bisector of the intermediate angle.

At least one pin-like projection may have a tapered shape, facilitating for example assembly and allowing, for example, advantageous locking, e.g. latching, forces.

In embodiments, the particular section, in particular symmetrical particular section, may extend between the pin-like projections associated with the particular hook-lap and particular locking slot.

The apex of the particular section may be essentially level with the free ends of the pin-like projections such that, for example, the pin-like projections and the particular section define, as indicated above, an M-shaped contour, which may for example be symmetric to the bisector of the intermediate angle.

In embodiments, at least one of the partitions, preferably each one of the partitions, comprises, in the region between the slide-locking male interface and slide-locking female interface a plurality of venting or ventilation openings. Such openings, provided for example in the particular section of the partitions, may be used as venting means in case of using the modular pot as a fire or grill pot.

The openings may for example be implemented as two-sided closed, e.g. longitudinal, slots. Further, the openings may be arranged in one or more parallel rows, preferably tilted against the longitudinal extension of the male and female interface. The rows may for example be perpendicular to the bisector of the intermediate angle.

In further embodiments, the openings may be arranged symmetrically with regard to the bisector. Further, the openings may be located in a region near the point of intersection.

Providing the openings in accordance with the proposed shape and/or arrangement may be effective in obtaining sufficient stability, in particular bending stiffness, of the partitions.

In embodiments, one or more of the partitions, in particular each of the partitions may comprise a wall section defining in the assembled state of the partitions a sidewall of the modular pot, e.g. the sidewalls of a cavity defined by the partitions. The male and female interfaces may be implemented at the outer edges of such a wall section, for example.

In embodiments, the wall may have the shape of an essentially equilateral triangle having an associated triangle-apex coinciding with the point of intersection.

In embodiments, the male and female interfaces may be implemented to extend along those legs of the triangle that originate from the triangle-apex.

In particular with such embodiments, pots having tetrahedron pot cavities may be obtained, requiring a low number of overall components, whilst obtaining adequate pot volumes. Also, adequate stability of the modular pot may be obtained.

In embodiments, one or more of the partitions, in particular each one of the partitions, may comprise a pedestal section, for example a foot section, for supporting the pot in the assembled state against the ground. The pedestal, i.e. the pedestal section, in embodiments, may be implemented subsequently to the female interface.

Further, the pedestal in embodiments, may extend away from the female interface in a direction inclined against or essentially parallel to the bisector of the first and second locking axis passing through the associated partition, such that the free end of the pedestal and the point of intersection are located at the same side of the partition.

In embodiments, the pedestal may be implemented to extend beyond the point of intersection such that the height of the pedestal extending beyond the point of intersection and measured in parallel to the bisector of the first and second locking axis amounts to one third to one half of the total height of the partition measured in parallel to the bisector. With such embodiments sufficient stability when placing the modular pot on the ground may be obtained.

In embodiments, the pedestal may be implemented such that it extends in a one-piece configuration from the associated wall section, such that the female interface is arranged in between the wall section and the pedestal.

With such embodiments, in particular pedestals, an overall design may be obtained that is space-saving in the disassembled state and/or allows the manufacture of the modular pot, in particular the partitions, with comparatively low base material consumption.

In embodiments, one or more of the partitions, preferably all of the partitions, may comprise on a face side averted from the point of intersection one or more recesses, e.g. detents.

One or more of the recesses may be arranged symmetrically to the bisector between the first and second locking axis of the corresponding partition in or on which the recess is provided.

The one or more recess may be configured for accommodating, e.g. inserting therein, at least edge-sections of a top plate, shelf, or grating in a slid-proof manner.

For example, the recesses may be implemented to accommodate sections of a grill grating such that the grill grating may be placed, in the assembled state, over the cavity, e.g. a coal tray, defined by the cavity of the modular pot.

In embodiments, all of the partitions, except for the male and female interfaces, may have, with respect to a plan view, the same footprint, i.e. the same basic shape.

With the above embodiments, a multifunctional use may be obtained for the modular pot by using the partitions as set out above.

In embodiments, the partitions in the assembled state may define a cavity, wherein the modular pot in the assembled state may optionally comprise exactly three partitions such that the cavity has an inverse, in particular regular, tetrahedron shape. With such embodiments, a minimal number of partitions may be obtained.

In embodiments, the modular pot may comprise one or more of at least one top plate, at least one shelf, and at least one grating, e.g. a grill grating, dimensioned in such a way to be suitable for being inserted into the cavity at a predefined level as compared to the point of intersection. The level may be measured in parallel to the bisector between the first and second locking axis.

For example, the plate, shelf, and/or grating may be designed and sized such that it may be positioned and held, in the ordinary mounted state at a predefined level above the venting slots.

In embodiments, the one or more of at least one top plate, at least one shelf, and at least one grating, may be implemented for being placed, in the assembled state, on a top side of the pot, wherein the top side is averted from the point of intersection. For example, the plate, shelf, and/or grating, may be shaped and sized such that they can be inserted into the recesses mentioned above.

In further embodiments, at least one of the top plate, shelf, and/or grating may be implemented such that, in a first alignment relative to a given orientation of the assembled modular pot, the at least one top plate, shelf, and/or grating fits into the cavity at a, or the predefined level, and in a second alignment relative to the given orientation of the assembled modular pot, the at least one top plate, shelf, and/or grating is placeable on the top side of the assembled modular pot, for example into the recesses.

In embodiments, in which the cavity has an inverse, in particular regular, tetrahedron shape, at least one of the top plate, shelf, and/or grating may have an equilateral triangle footprint.

As regards the embodiments related to the one or more of at least one top plate, at least one shelf, and at least one grating, a modular design with a variety of possible different uses, e.g. plant pot, grill, plant rack and the like, may be obtained with a single technical design of the partitions and/or plate, shelf, and/or grating.

In an embodiment, according to claim 15, an assembly kit for assembling a modular pot according to one or more embodiments of the modular pot according to the invention as described herein may be provided.

The assembly kit may comprise as assembly kit elements at least three partitions as described in one or more embodiments herein, and may optionally comprise one or more of at least one top plate, at least one shelf, and at least one grating, in particular grilling grating and/or ash grating, as described herein.

As to advantages and advantageous technical effects of the assembly kit, reference is made to the discussion above, applying *mutatis mutandis* to the assembly kit.

Further embodiments and variants, in particular exemplary embodiments, will be described in the following in connection with the annexed figures, in which:
FIG. 1 shows a first embodiment of a modular pot;
FIG. 2 shows the first embodiment of the modular pot in a different configuration;
FIG. 3 shows a second embodiment of a modular pot;
FIG. 4 shows the second embodiment in a different mounting configuration;
FIG. 5 to FIG. 8 show assembly parts of the modular pot of the first embodiment;
FIG. 9 to FIG. 12 show assembly parts of the modular pot of the second embodiment; and
FIG. 13 and FIG. 14 show different stages during assembly of the modular pot.

In the embodiments shown in the figures, elements similar or identic in function are designated with like reference signs. It is noted, that the figures may not be true to scale with respect to each other.

The embodiments in the figures may relate to preferred embodiments, while all elements and features described in connection with embodiments may be used, as far as appropriate, in combination with any other embodiment and feature as discussed herein, in particular related to any other embodiment discussed further above.

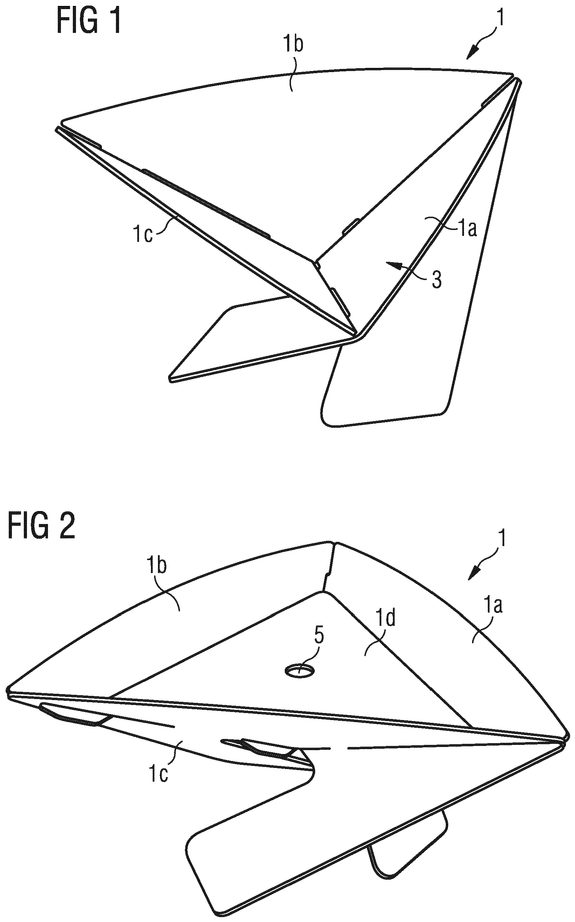

FIG. 1 shows a first embodiment of a modular pot 1, wherein the modular pot of the first embodiment is implemented as a plant pot, rack or stand for potted plants, for example, and will be designated in the below description as the first modular pot 1. FIG. 2 shows a different configuration of the first modular pot 1.

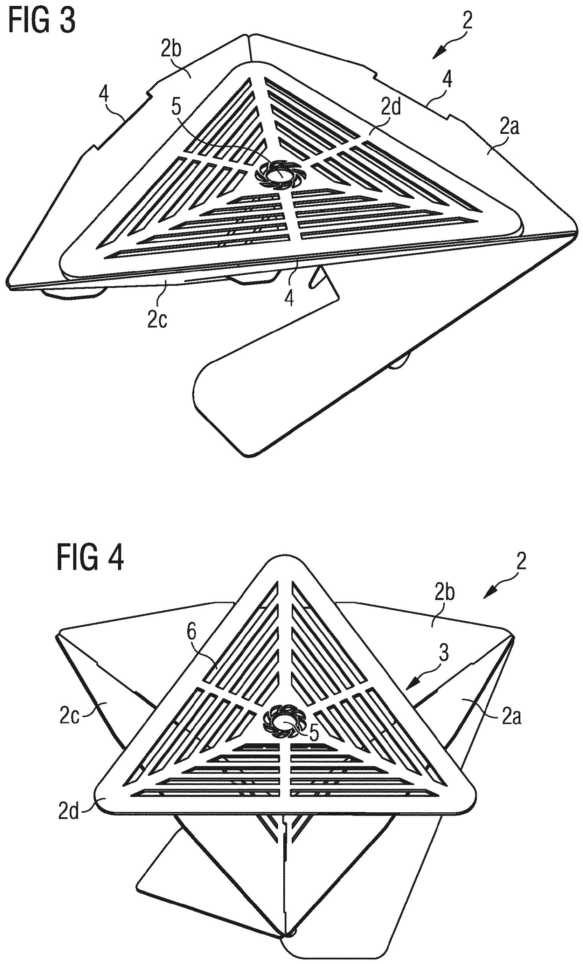

FIG. 3 shows a second embodiment of a modular pot 2, wherein the modular pot of the second embodiment is implemented as a grill or fire pot, for example, and will be designated in the below description as the second modular pot 2. FIG. 4 shows the second modular pot 2 in a different configuration.

The first modular pot 1 comprises a first to third partition 1a, 1b, 1c assembled and interconnected with each other to define an inner cavity 3, having for example a bowl or shell-like design. The cavity 3 may for example be used as a planting pot for potted plants.

In the configuration in FIG. 2, the first modular pot 1 further comprises an additional shelf 1d that may be placed within the cavity 3 at a predefined level above the lowermost level of the cavity 3. In this configuration, a potted plant, for example, or other things may be placed on the shelf 1d. The first modular pot 1 in this configuration may for example be used as a rack or stand.

Similarly, the second modular pot 2 comprises a first to third partition 2a, 2b, 2c assembled and interconnected with each other to define an inner cavity 3, having for example tetrahedron shape, similar to that of the first modular pot 1. The cavity 3 of the second modular pot 2 may be used as a fire bowl or a coal tray in case of using the second modular pot 2 as a fire pot or grill, in particular barbecue grill.

As can be seen from FIG. 3 and FIG. 4, the second modular pot 2 may comprise a grating 2d, having a similar shape as the shelf of the first modular pot, i.e. a regular equilateral triangle.

The grating 2d is shaped and sized such that it can be placed within the cavity 3, at a predefined level above lowermost level of the cavity 3, which is shown and can be derived from in FIG. 3. In particular, the grating 2d is sized such that it fits with a predetermined cross section of the cavity 3 at a predetermined distance from the lowermost level of the cavity 3.

In the embodiment of the second modular pot 2 as shown in the figures, the partitions 2a to 2c are specially configured such that the grating 2d can be placed on the top of the partitions 2a to 2c in the ordinary mounted state. By this, the distance of the grating to for example barbecue coals located in the cavity 3 can be varied, in particular from the level within the cavity 3 to the level above the partitions 2a to 2c.

For this, each of the partitions 2a to 2c of the second modular pot 2 comprise at their top edge, approximately symmetric to the middle of the top edge, e.g. symmetric to the bisector 16 a recess 4.

The recesses 4 are shaped such that the grating 2d in the region of its tips may be inserted into the recesses 4, such that slipping off the partitions 2a to 2c may be greatly avoided.

As can be seen from a combined view of FIG. 3 and FIG. 4, the grating 2d may be brought from the configuration in FIG. 3 to that in FIG. 4 in that the grating 2d is rotated around the center normal by for example about 60° in the present case.

The grating 2d, but also the shelf 1d may comprise a center hole 5 that may serve as a gripping means for inserting and removing the grating 2d or shelf 1d into or from the cavity 3.

The grating 2d comprises a plurality of grating slots 6, implemented as longitudinal slots and respectively running parallel to one particular side of the triangular grating 2d. The grating slots 6 provided in pairs are located one behind the other, wherein two consecutive grating slots 6 are separated by a bar running perpendicular to a respective edge of the grating 2d.

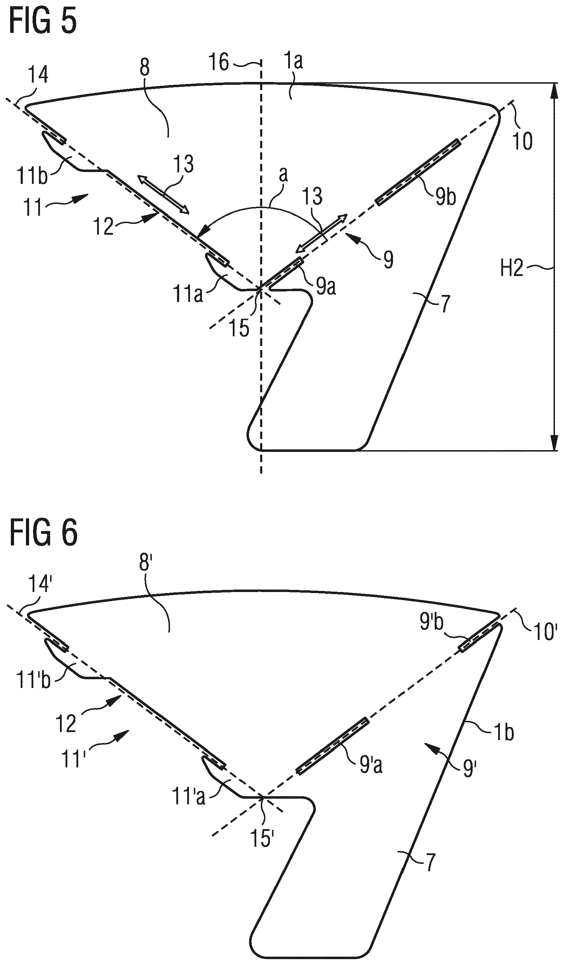

Reference is now made to FIG. 5 to FIG. 8 showing the assembly parts 1a to 1d of the first modular pot 1.

FIG. 1 shows the first partition 1a of the first modular pot 1. The first partition 1a comprises a pedestal section 7 for supporting the first modular pot 1 in the assembled state against the ground.

Further, the first partition 1a comprises a wall section 8 defining in the assembled state (see FIG. 1, 2) of the partitions 1a to 1c a sidewall of the first modular pot 1, more specifically a sidewall of the cavity 3 of first modular pot 1.

In between the wall section 8 and the pedestal section 7 a slide locking female interface 9 is provided, i.e. implemented. The female interface 9 comprises a pair of longitudinal locking slots, with a one-sided open first locking slot 9a and a two-sided closed second locking slot 9b. The locking slots 9a, 9b are implemented as longitudinal slots, and are arranged one behind each other such that they define a common locking axis, which is designated as a second locking axis 10 herein.

On the outer edge of the wall section 8, opposing the female interface 9, a slide-locking male interface 11 is provided. The male interface comprises a pair of hook-laps, i.e. a first hook-lap 11a and a second hook-lap 11b, projecting from the corresponding face side 12 in a lateral direction of the first partition 1a, as can be inferred from FIG. 5.

The hook-laps 11a, 11b are implemented such that they can engage a corresponding female interface of one of the other partitions 1b or 1c, which will become clear from the following description.

As can be seen from a combined view of FIG. 5 to FIG. 7, each partition 1a to 1c comprises a slide-locking male interface 11 having one or more male hook-laps 11a, 11b, and a slide-locking female interface 9 having one or more counterpart female locking slots 9a, 9b for locking corresponding hook-laps 11a, 11b of another partition therein in a slide-to-lock or slide-to-unlock movement 13, exemplarily indicated by arrows in FIG. 5.

Below, male and female interfaces of the second partition 1b will also be designated with reference signs 11' and 9', respectively, and interfaces of the third partition 1c will also designated with reference signs 11'' and 9'', respectively.

As can be seen from the combined view of FIG. 5 to FIG. 7, with each partition, the hook-laps 11a, 11'a, 11''a, 11b, 11'b, and 11''b of the male interfaces 11, 11', and 11'' are arranged along a first locking axis 14.

The arrangement of the hook-laps and the arrangement of the locking slots within the male and female interfaces 11, 11', and 11"; and 9, 9', 9'' is such that the first and second locking axis 14, 10 of each partition 1a to 1c respectively have one common point of intersection 15, 15', 15''.

Regarding the point of intersection 15, 15', 15'', it shall become clear from the figures that the point of intersection may be determined based on a plan view or a corresponding plan view projection of a corresponding partition, as is for example the case in the annexed figures. Further reference as regards the first and second locking axis 14, 10 is made to the discussion further above.

The point of intersection 15, 15', 15'' in the embodiments shown in connection with the figures lies on the edge of circumference of the corresponding partitions 1a, 1b, 1c.

The first and second locking axis 14, 10, for example may be defined in such a way so as to adhere to, e.g. to be located within a surface defined by, the locking interface 11, 11', 11" and 9, 9', 9'', respectively. Such a surface for example may be the face side 12 referred to above. The second locking axis 10, for example may correspond to a longitudinal center axis of the locking slots 9a, 9b.

The partitions 1a to 1c may for example be implemented such that an intermediate angle a between the second locking axis 10 and the first locking axis 14, with regard to a plan view in which the male interface 11 is located on the left-hand side and a right-handed coordinate system as a reference, lies within the range of 30° to 130, in the present case at for example at about 120°.

As can be inferred from FIG. 5, the pedestal section 7 extends in a direction away from the female interface 9 and is inclined against the bisector 16 of the first and second locking axis 14, 10.

The free end of the pedestal 7, i.e. the end of the pedestal 7 facing away from the wall section 8 and the point of intersection 15, extends beyond the point of intersection 15 such that the height H1 of the pedestal 7 extending beyond the point of intersection 15 and measured in parallel to the bisector 16 of the first and second locking axis 14, 10 amounts to about 0,4 to 0,5 of the total height H2 of the partition 1a.

The pedestal 7 in the present configuration is implemented such that it extends in a one-piece configuration from the associated wall section 8, wherein the female interface 9 is arranged therebetween, also implemented in a one-piece configuration with the wall section 8 and the pedestal 7.

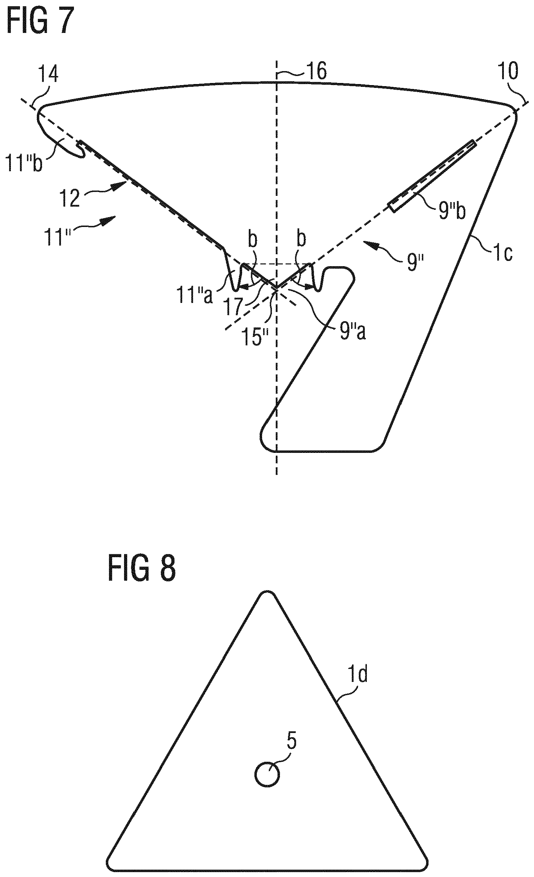

FIG. 6 shows the second partition 1b, which has essentially the same shape and form as the first partition 1a. FIG. 7 shows the third partition 1c, also having a similar general basic shape as the first and second partitions 1a, 1b. Reference is made to the description above applying mutatis mutandis.

The differences in the partitions 1a to 1c lie essentially in the configuration of the male and female interfaces 9, 11 which will be described in further detail below.

The male interface 11' of the second partition 1b is similar to that of the first partition 1a and comprises a first hook-lap 11'a and a second hook-lap 11'b arranged along the corresponding first locking axis 14'. The hook-openings of the hook-laps 11' are oriented away from the point of intersection 15' defined as the intersection of the first locking axis 14' and the second locking axis 10'.

The hook-laps 11'a, 11'b of the second partition 1b and corresponding hook-openings are designed and arranged such that they can be engaged with the first and second locking slots 9a, 9b of the first partition 1a in a slide-to-lock movement 13, such that the pedestals 7 of both the first and second partition 1a, 1b project from the same side of the combined structure.

The locking slots 9'a and 9'b of the second partition 1b are implemented as longitudinal slots, wherein the first locking slot 9'a which is located closer to the point of intersection 15' is implemented as a two-sided closed longitudinal slot, and the second locking slot 9'b is implemented at the edge of the wall section 8' as a one-sided open slot.

Reference is now made to FIG. 7 showing the third partition 1c of the first modular pot 1. The third partition has the same basic shape as the other two partitions 1a, 1b, but differs from the first and second partition 1a and 1b in the structure and shape of the male and female interfaces 11'' and 9'', which will be explained in more details below.

The third partition 1c comprises hook-laps 11a" and 11''b having hook-openings oriented towards the associated point of intersection 15''. One particular male hook-lap 11''a of the male interface 11'', which is located next to the associated point of intersection 15'' has an hook-lap opening angle b of about 15° to 80°, in particular 20° to 60°, for example about 30° to 60°, in particular about 60°.

The opening angle b may for example have half the size of the intermediate angle a.

In such a configuration, for example, it may further be provided, as is the case with the third partition 1c shown in FIG. 7, that one particular female locking slot 9''a of the female interface 9'', that is located next to the associated point of intersection 15" is a one-sided open slot having a slot opening facing the associated point of intersection 15'' and having a slot opening angle b of the same or similar size as that of the particular first hook-lap 11''a.

In the configuration shown in the figures, the particular male hook-lap 11''a and the particular female locking slot 9''a are arranged symmetrically with respect to the bisector 16 of the intermediate angle a, and beyond that have a symmetrical design with respect to the bisector 16.

As can be inferred from FIG. 7, showing the configuration having the particular hook-lap 11''a and the particular locking slot 9''a, a particular, i.e. defined, section 17 of the third partition 1c extends into the space between the particular hook-lap 11''a and particular locking slot 9''a. The particular section 17 has a triangular shape and is arranged symmetrically between the particular hook-lap 11"a and particular locking slot 9''a. Further, the apex of the particular section 17 coincides with the point of intersection 15''. However, it shall be noted, that the apex and the point of intersection 15'' may differ from each other.

The particular hook-lap 11'a and particular locking slot 9''a in the embodiment shown in the figures are implemented and defined as a pin-like projections projecting from the associated male 11'' or female locking interface 9'', and extend essentially parallel to the bisector 16 of the intermediate angle a. The pin-like projections are slightly tapered and comprise at the sides facing the point of intersection 15'' abutment faces for abutting a counterpart slide-locking element.

The pin-like projections as shown in the figures have about the same length, which may be varied in other embodiments, meaning that the pin-like projections may have different lengths and/or dimensions.

In the configuration as shown in FIG. 7, the particular section 17 extends between the pin-like projections associated with the particular hook-lap 11''a and particular locking slot 9''a, wherein the apex 15" of the particular section 17 is essentially level with the free ends of the pin-like projections such that the pin-like projections and the particular section 17 define a M-shaped contour. It shall be noted, that the pin-like projections in embodiments may be longer or shorter, and the apex of the particular section 17 may lie beyond their ends or the outer ends of the pin-like projections may lie beyond the apex.

The first to third partition 1a to 1c, in particular their male 11, 11', 11'' and female interfaces 9, 9', 9", may be implemented such that the male interface 11' of the second partition 1b matches the female interface 9 of the first partition 1a and can be attached to the first partition 1a in a slide-to-lock movement.

The male interface 11 of the first partition 1a is implemented such that it matches the female interface 9'' of the third partition 1c, wherein mutual attachment may be obtained in a slide-to-lock movement of the corresponding partitions.

Finally, the male interface 11''' of the third partition 1c is implemented such that it matches the female interface 9' of the second partition 9'.

FIG. 8 shows the shelf 1d of the first modular pot 1 in a plan view, wherein the shape in the form of a regular triangle can be inferred. The size of the shelf 1d is such that it may be positioned within the cavity at a certain level above the points of intersection 15. By adequately selecting the size of the shelf 1d, or by providing different sized shelfs, the total volume of the cavity 3 above the shelf 1d in the inserted state can be adapted to respective needs.

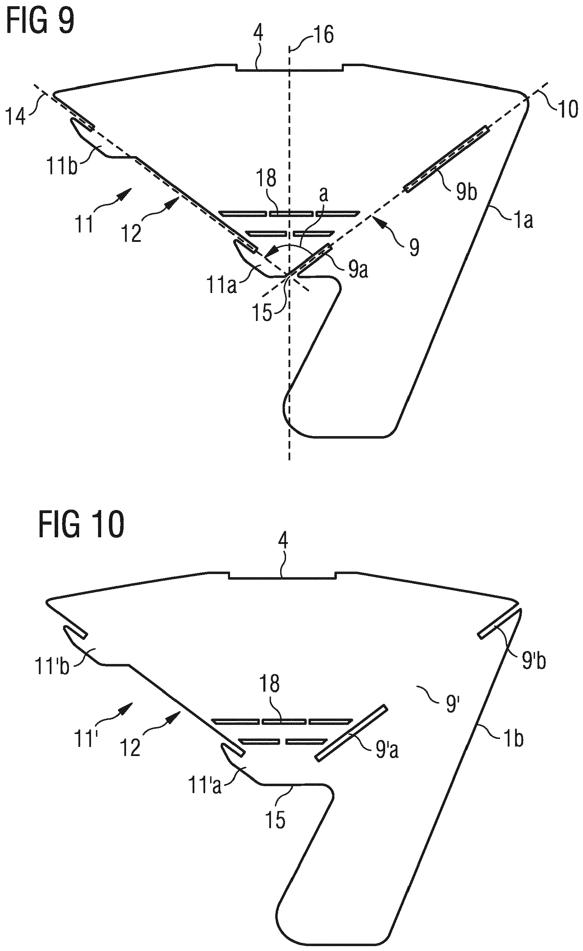

Reference is now made to FIG. 9 to FIG. 12 showing assembly parts of the second modular pot 2. It shall be noted, that the shape of the first to third partitions 2a, 2b, 2c of the second modular pot 2 and the shape and arrangement of the male interfaces 11, 11', 11'' and the female interfaces 9, 9', 9", as well as corresponding hook-laps and locking slots correspond essentially to those as shown and described in connection with the first modular pot 1. Reference is therefore made to the description above which shall apply mutatis mutandis.

In the following, only the differences to the first modular pot 1 are described. Specifically, the second modular pot 2 differs from the first modular pot 1 in that each one of the partitions 2a, 2b, 2c comprises in the region between the male interface 11, 11', 11'' and female interface 9, 9', 9" a plurality of venting openings 18, implemented as two-sided closed slots.

The venting openings 18 are arranged in one or more parallel rows, and are tilted against the longitudinal extension of the male and female interface 11, 11', 11' and 9, 9', 9''. The rows of venting openings 18 are arranged perpendicularly to the bisector 16 of the intermediate angle a.

In addition, the venting openings 18 are arranged symmetrically with regard to the bisector 16, wherein the venting openings 16 are located in a region near the point of intersection 15, 15', 15".

The venting openings 18 may function as air supply openings for example in case that the modular pot 2 is used as a fire pot or grill pot.

A further difference to the first modular pot 1 is, that each of the partitions 2a, 2b, 2c of the second modular pot 2 comprises on a face side averted from the point of intersection 15, 15', 15'' one or more recesses 4, implemented symmetrically to the bisector 16 between the first and second locking axis 14, 10, and configured for accommodating at least edge-sections of the grating 2d in a slid-proof manner as described in further detail above.

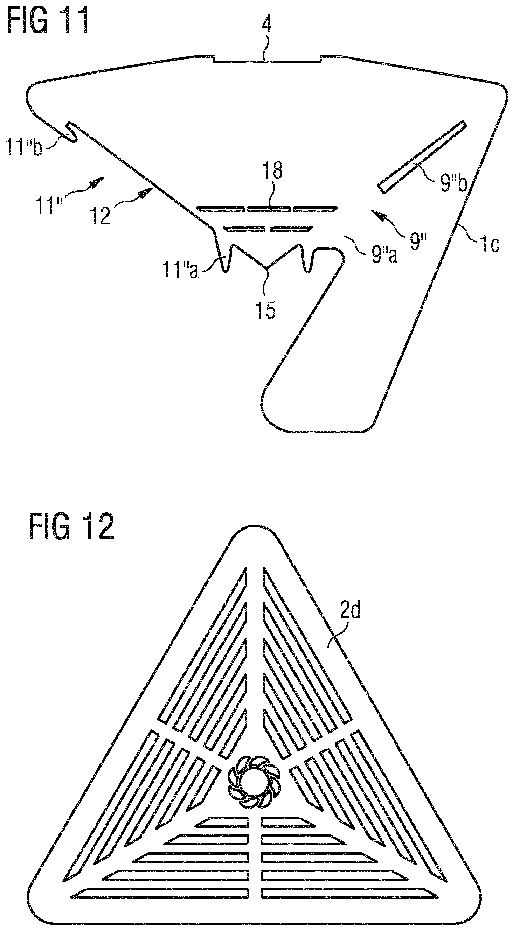

The grating 2d is shown in a plan view in FIG. 12, wherein the grating may have the same overall shape as compared to the shelf, except that grating slots may be provided as described in further detail above.

As can inferred from FIG. 5 to FIG. 12, except for the male 11. 11', 11'' and female interfaces 9, 9', 9'', all of the partitions 1a, 1b, 1c, 2a, 2b, 2c have with respect to a plan view the same footprint.

The advantage of the modular pots as described in connection with the figures in particular is, that they are composed of a low number of assembly parts, and in a planar design such that in the disassembled state comparatively little storing space is needed for the whole modular pot.

A further advantage may be seen in the fact that the proposed pots are highly modular and enable a plurality of different uses ranging from grill applications to racks for potted plants without requiring extensive changes in the technical design.

In addition, the special arrangement of the male and female interfaces allows easy assembly and disassembly, and at the same time provides tight interlock between the partitions in the assembled state.

The assembly of the modular pot 1, 2 may be as follows.

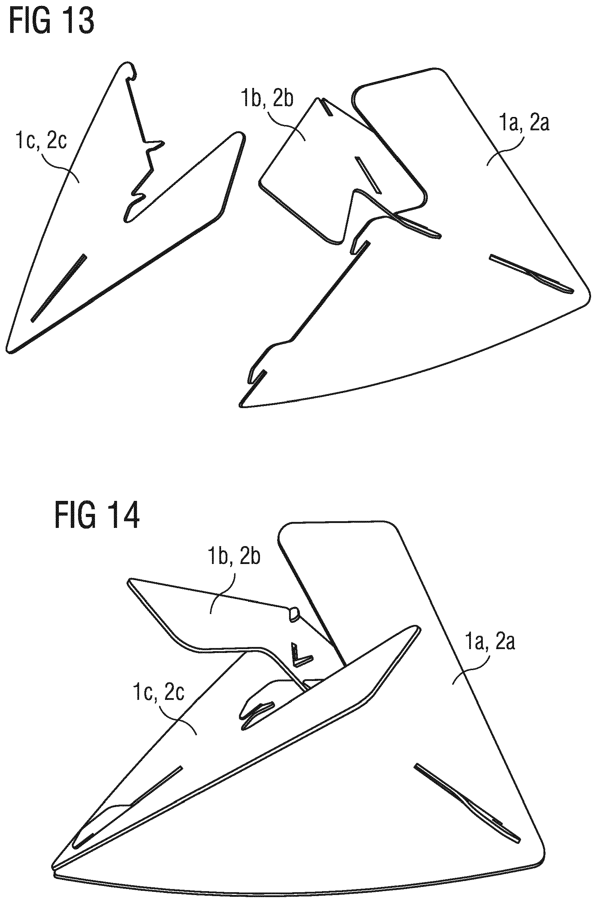

In a first assembly stage or step, the first and second partition 1a and 1b; or 2a and 2b may be attached to each other by engaging corresponding slide-locking interfaces as described above. The result of this assembly stage can be inferred from FIG. 13.

FIG. 14 shows the final assembly stage, in which the third partition 1c or 2c is coupled to the already assembled first and second partitions 1a, 1b, or 2a, 2b such that the male interface 11 of the first partition 1a or 2a engages the female interface 9'' of the third partition 1c or 2c, and such that the male interface 11" of the third partition 1c or 2c engages the female interface 9' of the second partition, wherein the third partition 1c or 2c is fixedly interconnected with the other two partitions by the interplay of the slide-locking connections as described.

In all, and in particular in view of the exemplary embodiments shown and described in connection with the figures, it can be seen, that the underlying problem is solved by the solution as proposed herein.

### List of reference numerals

- 1: first modular pot
- 1a: first partition
- 1b: second partition
- 1c: third partition
- 1d: shelf
- 2: second modular pot
- 2a: first partition
- 2b: second partition
- 2c: third partition
- 2d: grating
- 3: cavity
- 4: recess
- 5: center hole
- 6: grating slot
- 7: pedestal section
- 8: wall section
- 9: slide-locking female interface
- 9a: first locking slot
- 9b: second locking slot
- 10: second locking axis
- 11: slide-locking male interface
- 11a: first hook-lap
- 11b: second hook-lap
- 12: face side
- 13: slide-to-lock/slide-to-unlock movement
- 14: first locking axis
- 15: point of intersection
- 16: bisector
- 17: particular section
- 18: venting opening
- a: intermediate angle
- b: opening angle
- H1: height of pedestal
- H2: total height

## Claims

1. Modular pot (1, 2), in particular fire (2), grill (2), or deco pot (1), comprising:
at least three partitions (1a, 1b, 1c; 2a, 2b, 2c) interconnectable with each other by slide-locking connections; wherein
the partitions (1a, 1b, 1c; 2a, 2b, 2c) have substantially the same basic shape and preferably are planar in shape,
each partition (1a, 1b, 1c; 2a, 2b, 2c) comprising a slide-locking male interface (11) having one or more male hook-laps (11a, 11b), and a slide-locking female interface (9) having one or more counterpart female locking slots (9a, 9b) for locking hook-laps (11a, 11b) therein in a slide-to-lock movement,
wherein with each partition (1a, 1b, 1c, 2a, 2b, 2c), the one or more hook-laps (11a, 11b) of the male interface (11) arranged along a respective first locking axis (14), and the one or more slots (9a, 9b) of each female interface (9) arranged along a respective second locking axis (10), such that the first and second locking axis (14, 10) of each partition (1a, 1b, 1c, 2a, 2b, 2c) have one common point of intersection (15), and wherein
hook-openings of the hook-laps (11''a, 11''b) of the male interface (11'') of one of the partitions (lc, 2c) are oriented towards the associated point of intersection (15''), whereas hook-openings of the hook-laps (11a, 11b; 11'a, 11'b) of the male interface (11, 11') of the other partitions (1a, 1b, 2a,2b) are oriented away from their associated point of intersection (15, 15'),
wherein the partitions (1a, 1b, 1c; 2a, 2b, 2c) in the assembled state define a cavity (3),
**characterized in that**
one or more of the partitions (1a, 1b, 1c; 2a, 2b, 2c), in particular each of the partitions (1a, 1b, 1c; 2a, 2b, 2c), comprises:
a pedestal section (7) for supporting the pot (1, 2) in the assembled state against the ground, wherein,
the pedestal section (7) extending away from the female interface (9, 9', 9'') in a direction inclined against or essentially parallel to the bisector (16) of the first and second locking axis (14, 10) passing through the associated partition (1a, 1b, 1c), such that the free end of the pedestal section (7) and the point of intersection (15, 15', 15") are located at the same side of the partition (1a, 1b, 1c),
wherein the pedestal section (7) is implemented to extend beyond the point of intersection (15, 15', 15'') such that the height (H1) of the pedestal (7) extending beyond the point of intersection (15, 15', 15'') and measured in parallel to the bisector (16) of the first and second locking axis (14, 10) amounts one third to one half of the total height of the partition (H2) measured in parallel to the bisector (16).

2. Modular pot (1, 2) according to claim 1, the modular pot (1, 2) comprises one or more of at least one top plate, at least one shelf (1d), and at least one grating (2d), dimensioned in such a way to be suitable for being inserted into the cavity (3) at a predefined level as compared to the point of intersection (15, 15', 15''), the level measured in parallel to the bisector (16) between the first and second locking axis (14, 10); and/or for being placed, in the assembled state, on a top side of the pot (2), the top side averted from the point of intersection (15, 15', 15''); wherein
at least one of the top plate, shelf (1d), and/or grating (2d) is implemented such that, in a first alignment relative to a given orientation of the assembled modular pot (2), the at least one top plate, shelf (1d), and/or grating (2d) fits into the cavity (3) at a or the predefined level, and in a second alignment relative to the given orientation of the assembled modular pot (2), the at least one top plate, shelf (1d), and/or grating (2d) being placeable on the top side of the assembled modular pot (2), wherein in case that the cavity (3) has an inverse, in particular regular, tetrahedron shape, at least one of the top plate, shelf (1d), and/or grating (2d) optionally has an equilateral triangle footprint.

3. Modular pot (1, 2) according to one or more of claims 1 and 2, wherein the male (11) and female interfaces (9) of each of the partitions (1a, 1b, 1c, 2a, 2b, 2c) are configured such that:
each male interface (11) of one of the partitions (1a, 1b, 1c, 2a, 2b, 2c) is assigned for being interlocked with a particular female interface (9) of one of the remaining partitions (1a, 1b, 1c, 2a, 2b, 2c) of the plurality of partitions (1a, 1b, 1c, 2a, 2b, 2c); and/or
the male hook-laps (11a, 11b) project from a face side (12) of the associated partition (1a, 1b, 1c, 2a, 2b, 2c); and/or
the male hook-laps (11a, 11b) are implemented in coplanar arrangement with the associated partition (1a, 1b, 1c; 2a, 2b, 2c); and/or
the female locking slots (9a, 9b) are implemented as longitudinal slots running essentially parallel to the second locking axis (10), wherein one or more of the female locking slots (9a, 9b) are implemented as two-sided closed slots, and/or wherein one or more of the female locking slots (9a, 9b) are implemented as one-sided open slots;
wherein each female locking interface (9, 9', 9") optionally comprises one or more, in particular exactly one, one-sided open locking slot, and one or more, in particular exactly one, two-sided closed locking slot.

4. Modular pot (1, 2) according to one or more of claims 1 and 3, wherein the slide-locking interfaces (9, 9', 9''; 11, 11', 11'') of one or more of the partitions (1a, 1b, 1c, 2a, 2b, 2c), optionally of all of the partitions (1a, 1b, 1c, 2a, 2b, 2c), are implemented such that:
for each of the one or more partitions (1a, 1b, 1c, 2a, 2b, 2c), the point of intersection (15) lies on the edge of or within the circumference of the corresponding partition (1a, 1b, 1c, 2a, 2b, 2c).

5. Modular pot (1, 2) according to one or more of claims 1 to 4, wherein an intermediate angle (a) between the second locking axis (10) and the first locking axis (14), with regard to a plan view in which the male interface (11) is located on the left-hand side and a right-handed coordinate system as a reference, lies within the range of 30° to 130.

6. Modular pot (1, 2) according to one or more of claims 1 to 5, wherein, with the one partition (1c) that comprises hook-laps (11''a, 11''b) with hook-openings oriented towards the associated point of intersection (15"),
one particular male hook-lap (11''a) of the male hoop-laps (11a, 11b, 11'a, 11'b, 11''a, 11"b) that is located next to, in particular closest to, the associated point of intersection (15'') has an hook-lap opening angle (b) of about 15° to 80°, preferably of about 60°, optionally, when depending on claim 4, having half the size of the intermediate angle (a).

7. Modular pot (1, 2) according to one or more of claims 1 to 6, wherein, with the one partition (1c) that comprises hook-laps (11"a, 11"b) with hook-openings oriented towards the associated point of intersection (15"),
one particular female locking slot (11''a) of the female locking slots (11''a, 11''b) that is located next to, in particular closest to, the associated point of intersection (15'') is a one-sided open slot having a slot opening facing the associated point of intersection (15'') and having a slot opening angle (b) of about 15° to 80°, preferably of about 60°, optionally, when dependent on claim 4, having half the size of the intermediate angle (a).

8. Modular pot (1, 2) according to claim 6 and 7, wherein:
the hook-lap opening angle (b) and the slot opening angle (b) have essentially the same absolute values; and/or
when dependent on claim 4,
the particular male hook-lap (11''a) and particular female locking slot (9"a) optionally are arranged symmetrically with respect to the bisector (16) of the intermediate angle (a); and further optionally have a symmetrical design with respect to the bisector (16).

9. Modular pot (1, 2) according to one or more of claims 5 and 6, and claims 7, wherein,
with the partition associated with the particular hook-lap (11"a) and particular locking slot (9"a), a particular section (17) of the partition (1c) extends into the space between the particular hook-lap (11'a) and particular locking slot (9"a), the particular section (17) optionally having a triangular shape, and being arranged symmetrically between the particular hook-lap (11''a) and particular locking slot (9"a), wherein further optionally an apex (15'') of the particular section (17), in particular triangular shaped particular section (17), coincides with the associated point of intersection (15").

10. Modular pot (2) according to one or more of claims 1 to 9, wherein
at least one of the partitions (2a, 2b, 2c), preferably each one of the partitions (2a, 2b, 2c), comprises in the region between the slide-locking male interface (11, 11', 11") and slide-locking female interface (9, 9', 9'') a plurality of venting or ventilation openings (18),
the openings (18) optionally implemented as two-sided closed slots,
the openings (18) further optionally arranged in one or more parallel rows, preferably tilted against the longitudinal extension of the male and female interface (11, 11', 11''; 9, 9', 9"), and, when dependent on claim 4, the rows further optionally being perpendicular to the bisector (16) of the intermediate angle (a); and/or,
when dependent on claim 4, the openings (18) optionally being arranged symmetrically with regard to the bisector (16); wherein
the openings (18) yet further optionally being located in a region near the point of intersection (15, 15', 15").

11. Modular pot (1, 2) according to one or more of claims 1 to 10, wherein one or more of the partitions (1a, 1b, 1c; 2a, 2b, 2c), in particular each of the partitions (1a, 1b, 1c; 2a, 2b, 2c) comprises:
a wall section (8) defining in the assembled state of the partitions (1a, 1b, 1c; 2a, 2b, 2c) a sidewall of the pot (1, 2), the male and female interfaces (11, 11', 11''; 9, 9', 9'') optionally implemented at the outer edges (12) of the wall section (8), wherein
the wall section (8) optionally has the shape of an essentially equilateral triangle having an associated triangle-apex (15, 15', 15") coinciding with the point of intersection (15, 15', 15"), wherein
the male and female interfaces (11, 11', 11''; 9, 9', 9'') preferably implemented to extend along those legs of the triangle originating from the triangle-apex (15, 15', 15").

12. Modular pot (1, 2) according to one or more of claims 1 to 11, wherein
the pedestal section (7) being implemented subsequently to the female interface (9, 9', 9"),
wherein
when dependent on claim 10, the pedestal section (7) optionally being implemented such that it extends in a one-piece configuration from the associated wall section (8), such that the female interface (9, 9', 9'') is arranged in between the wall section (8) and the pedestal section (7).

13. Modular pot (1, 2) according to one or more of claims 1 to 12, wherein,
one or more of the partitions (2a, 2b, 2c), preferably all of the partitions (2a, 2b, 2c), comprises on a face side averted from the point of intersection (15, 15', 15'') one or more recesses (4), preferably arranged symmetrically to the bisector (16) between the first and second locking axis (14, 10), and configured for accommodating at least edge-sections of a top plate, shelf (1d), or grating (2d) in a slid-proof manner; and/or wherein
except for the male and female interfaces (11, 11', 11''; 9, 9', 9"), all of the partitions (1a, 1b, 1c; 2a, 2b, 2c) have with respect to a plan view, the same footprint.

14. Modular pot (1, 2) according to one or more of claims 1 to 13, wherein the modular pot (1, 2) in the assembled state comprises three partitions (1a, 1b, 1c, 2a, 2b, 2c) such that the cavity (3) has an inverse, in particular regular, tetrahedron shape.

15. Assembly kit (1a, 1b, 1c, 1d; 2a, 2b, 2c, 2d) for assembling a modular pot (1, 2) according to one or more of claims 1 to 14, the assembly kit (1a, 1b, 1c, 1d; 2a, 2b, 2c, 2d) comprising as assembly kit elements at least three partitions (1a, 1b, 1c; 2a, 2b, 2c) as defined in claim 1, and optionally comprising one or more of at least one top plate, at least one shelf (1d), and at least one grating (2d), in particular grilling grating (2d) and/or ash grating (2d), in accordance with claim 14.

## Patentansprüche

1. Modularer Behälter (1, 2), insbesondere Feuer (2), Grill (2) oder Deko-Behälter (1), umfassend:
mindestens drei Trennwände (1a, 1b, 1c; 2a, 2b, 2c), die durch Schiebeverriegelungsverbindungen miteinander verbindbar sind; wobei
die Trennwände (1a, 1b, 1c; 2a, 2b, 2c) im Wesentlichen die gleiche Grundform haben und vorzugsweise plan sind,
jede Trennwand (1a, 1b, 1c; 2a, 2b, 2c) eine schiebeverriegelnde Steckerschnittstelle (11) mit einer oder mehreren Steckerhakenlaschen (11a, 11b) und eine schiebeverriegelnde Aufnahmeschnittstelle (9) mit einem oder mehreren entgegengesetzten Aufnahmeverriegelungsschlitzen (9a, 9b) zum Verriegeln der Hakenlaschen (11a, 11b) in einer Schiebeverriegelungsbewegung umfasst,
wobei bei jeder Trennwand (1a, 1b, 1c, 2a, 2b, 2c) eine Hakenlasche oder mehrere Hakenlaschen (11a, 11b) der Steckerschnittstelle (11) entlang einer jeweiligen ersten Verriegelungsachse (14) angeordnet sind und der eine Schlitz oder die mehreren Schlitze (9a, 9b) jeder Aufnahmeschnittstelle (9) entlang einer jeweiligen zweiten Verriegelungsachse (10) angeordnet ist/sind, so dass die erste und die zweite Verriegelungsachse (14, 10) jeder Trennwand (1a, 1b, 1c, 2a, 2b, 2c) einen gemeinsamen Schnittpunkt (15) aufweisen, und wobei
die Hakenöffnungen der Hakenlaschen (11"a, 11"b) der Steckerschnittstelle (11") einer der Trennwände (1c, 2c) auf den zugehörigen Schnittpunkt (15") ausgerichtet sind, während die Hakenöffnungen der Hakenlaschen (11a, 11b; 11'a, 11'b) der Steckerschnittstelle (11, 11') der anderen Trennwände (1a, 1b, 2a, 2b) von ihrem zugehörigen Schnittpunkt (15, 15') abgewandt ausgerichtet sind,
wobei die Trennwände (1a, 1b, 1c; 2a, 2b, 2c) im zusammengesetzten Zustand einen Hohlraum (3) definieren,
**dadurch gekennzeichnet, dass**
eine Trennwand oder mehrere der Trennwände (1a, 1b, 1c; 2a, 2b, 2c), insbesondere jede der Trennwände (1a, 1b, 1c; 2a, 2b, 2c), umfasst/umfassen:
einen Sockelabschnitt (7) zum Abstützen des Behälters (1, 2) im zusammengesetzten Zustand gegen den Boden, wobei,
sich der Sockelabschnitt (7) von der Aufnahmeschnittstelle (9, 9', 9") in einer Richtung erstreckt, die geneigt gegen oder im Wesentlichen parallel zur Halbierenden (16) der ersten und zweiten Verriegelungsachse (14, 10) ist, die durch die zugehörige Trennwand (1a, 1b, 1c) verläuft, so dass das freie Ende des Sockelabschnitts (7) und der Schnittpunkt (15, 15', 15") auf derselben Seite der Trennwand (1a, 1b, 1c) liegen,
wobei der Sockelabschnitt (7) so ausgeführt ist, dass er sich über den Schnittpunkt (15, 15', 15") hinaus erstreckt, so dass die Höhe (H1) des Sockels (7), die sich über den Schnittpunkt (15, 15', 15") hinaus erstreckt und parallel zur Halbierenden (16) der ersten und zweiten Verriegelungsachse (14, 10) gemessen wird, ein Drittel bis eine Hälfte der parallel zur Halbierenden (16) gemessenen Gesamthöhe der Trennwand (H2) beträgt.

2. Modularer Behälter (1, 2) nach Anspruch 1, wobei der modulare Behälter (1, 2) mindestens eine oder mehrere obere Platte/n, mindestens einen Boden (1d) und mindestens ein Gitter (2d) umfasst, die so dimensioniert sind, dass sie geeignet sind, in den Hohlraum (3) auf einem vorbestimmten Level in Bezug auf den Schnittpunkt (15, 15', 15") eingesetzt zu werden, wobei das Level parallel zur Halbierenden (16) zwischen der ersten und zweiten Verriegelungsachse (14, 10) gemessen wird; und/oder um im zusammengesetzten Zustand auf einer oberen Seite des Behälters (2) angeordnet zu werden, wobei die obere Seite von dem Schnittpunkt (15, 15', 15") abgewandt ist; wobei
mindestens ein/e obere Platte, Boden (1d) und/oder Gitter (2d) so ausgeführt ist, dass in einer ersten Ausrichtung relativ zu einer gegebenen Orientierung des zusammengesetzten modularen Behälters (2) die mindestens eine obere Platte, der Boden (1d) und/oder das Gitter (2d) in den Hohlraum (3) auf einem oder dem vordefinierten Level passt, und in einer zweiten Ausrichtung relativ zur vorgegebenen Orientierung des zusammengesetzten modularen Behälters (2) die mindestens eine obere Platte, ein Boden (1d) und/oder ein Gitter (2d) auf die obere Seite des zusammengesetzten modularen Behälters (2) aufsetzbar ist, wobei
für den Fall, dass der Hohlraum (3) eine inverse, insbesondere regelmäßige Tetraederform aufweist, mindestens ein/e obere Platte, Boden (1d) und/oder Gitter (2d) optional eine gleichseitige dreieckige Grundfläche aufweist.

3. Modularer Behälter (1, 2) nach einem oder mehreren der Ansprüche 1 und 2, wobei die Stecker- (11) und Aufnahmeschnittstellen (9) jeder der Trennwände (1a, 1b, 1c, 2a, 2b, 2c) so ausgelegt sind, dass:
jede Steckerschnittstelle (11) einer der Trennwände (1a, 1b, 1c, 2a, 2b, 2c) zur Verriegelung mit einer bestimmten Aufnahmeschnittstelle (9) einer der übrigen Trennwände (1a, 1b, 1c, 2a, 2b, 2c) der Vielzahl von Trennwänden (1a, 1b, 1c, 2a, 2b, 2c) zugeordnet ist; und/oder
die Steckerhakenlaschen (11a, 11b) von einer Stirnseite (12) der zugehörigen Trennwand (1a, 1b, 1c, 2a, 2b, 2c) vorstehen; und/oder
die Steckerhakenlaschen (11a, 11b) in koplanarer Anordnung mit der zugehörigen Trennwand (1a, 1b, 1c; 2a, 2b, 2c) ausgeführt sind; und/oder
die Aufnahmeverriegelungsschlitze (9a, 9b) als im Wesentlichen parallel zur zweiten Verriegelungsachse (10) verlaufende Längsschlitze ausgebildet sind, wobei ein oder mehrere der Aufnahmeverriegelungsschlitze (9a, 9b) als beidseitig geschlossene/ Schlitz/e ausgebildet ist/sind, und/oder wobei ein oder mehrere der Aufnahmeverriegelungsschlitz/e (9a, 9b) als einseitig offene/r Schlitz/e ausgebildet ist/sind; wobei jede Aufnahmeverriegelungsschnittstelle (9, 9', 9") optional einen oder mehrere, insbesondere genau einen, einseitig offenen Verriegelungsschlitz und einen oder mehrere, insbesondere exakt einen, beidseitig geschlossenen Verriegelungsschlitz umfasst.

4. Modularer Behälter (1, 2) nach einem oder mehreren der Ansprüche 1 und 3, wobei die Schiebeverriegelungs-Schnittstellen (9, 9', 9"; 11, 11', 11") einer Trennwand oder mehrerer der Trennwände (1a, 1b, 1c, 2a, 2b, 2c), optional aller Trennwände (1a, 1b, 1c, 2a, 2b, 2c), so ausgeführt sind, dass:
für jede der einen Trennwand oder der mehreren Trennwände (1a, 1b, 1c, 2a, 2b, 2c) der Schnittpunkt (15) auf dem Rand oder innerhalb des Umfangs der entsprechenden Trennwand (1a, 1b, 1c, 2a, 2b, 2c) liegt.

5. Modularer Behälter (1, 2) nach einem oder mehreren der Ansprüche 1 bis 4, wobei ein Zwischenwinkel (a) zwischen der zweiten Verriegelungsachse (10) und der ersten Verriegelungsachse (14), bezogen auf eine Draufsicht, bei der sich die Steckerschnittstelle (11) auf der linken Seite und ein rechtshändiges Koordinatensystem als Referenz befindet, im Bereich von 30° bis 130° liegt.

6. Modularer Behälter (1, 2) nach einem oder mehreren der Ansprüche 1 bis 5, wobei mit der einen Trennwand (1c), die Hakenlaschen (11"a, 11"b) mit Hakenöffnungen umfasst, die in Richtung des zugehörigen Schnittpunktes (15") ausgerichtet sind, einer bestimmten Steckerhakenlasche (11"a) der Steckerhakenlaschen (11a, 11b, 11'a, 11'b, 11"a, 11"b), die sich neben, insbesondere am nächsten an dem zugehörigen Schnittpunkt (15") befindet, ein Hakenlaschen-Öffnungswinkel (b) von etwa 15° bis 80°, vorzugsweise von etwa 60°, optional bei Abhängigkeit von Anspruch 4, mit der halben Größe des Zwischenwinkels (a) vorliegt.

7. Modularer Behälter (1, 2) nach einem oder mehreren der Ansprüche 1 bis 6, wobei mit der einen Trennwand (1c), die Hakenlaschen (11"a, 11"b) mit Hakenöffnungen umfasst, die in Richtung des zugehörigen Schnittpunktes (15") ausgerichtet sind, einem bestimmten Aufnahmeverriegelungsschlitz (11"a) der Aufnahmeverriegelungsschlitze (11"a, 11"b), der sich neben, insbesondere am nächsten an dem zugehörigen Schnittpunkt (15") befindet, ein einseitig offener Schlitz mit einer dem zugehörigen Schnittpunkt (15") zugewandten Schlitzöffnung und mit einem Schlitzöffnungswinkel (b) von etwa 15° bis 80°, vorzugsweise von etwa 60°, optional bei Abhängigkeit von Anspruch 4 mit der halben Größe des Zwischenwinkels (a) vorliegt.

8. Modularer Behälter (1, 2) nach Anspruch 6 und 7, wobei:
der Hakenlaschen-Öffnungswinkel (b) und der Schlitzöffnungswinkel (b) im Wesentlichen die gleichen Absolutwerte haben; und/oder bei Abhängigkeit von Anspruch 4,
die jeweilige Steckerhakenlasche (11"a) und der jeweilige Aufnahmeverriegelungsschlitz (9"a) optional symmetrisch in Bezug auf die Halbierende (16) des Zwischenwinkels (a) angeordnet sind; und ferner optional eine symmetrische Gestaltung in Bezug auf die Halbierende (16) aufweisen.

9. Modularer Behälter (1, 2) nach einem oder mehreren der Ansprüche 5 und 6 und 7, wobei sich mit der der jeweiligen Hakenlasche (11"a) und dem jeweiligen Verriegelungsschlitz (9"a) zugeordneten Trennwand ein bestimmter Abschnitt (17) der Trennwand (1c) in den Raum zwischen der jeweiligen Hakenlasche (11'a) und dem jeweiligen Verriegelungsschlitz (9"a) erstreckt, wobei der bestimmte Abschnitt (17) optional eine dreieckige Form aufweist und symmetrisch zwischen der jeweiligen Hakenlasche (11"a) und dem jeweiligen Verriegelungsschlitz (9"a) angeordnet ist, wobei ferner optional ein Scheitelpunkt (15") des jeweiligen Abschnitts (17), insbesondere des dreieckförmigen Abschnitts (17), mit dem zugehörigen Schnittpunkt (15") zusammenfällt.

10. Modularer Behälter (2) nach einem oder mehreren der Ansprüche 1 bis 9, wobei mindestens eine der Trennwände (2a, 2b, 2c), vorzugsweise jede der Trennwände (2a, 2b, 2c), im Bereich zwischen der schiebeverriegelnden Steckerschnittstelle (11, 11', 11") und der schiebeverriegelnden Aufnahmeschnittstelle (9, 9', 9") eine Mehrzahl von Entlüftungs- oder Belüftungsöffnungen (18) umfasst,
die Öffnungen (18) optional als beidseitig geschlossene Schlitze ausgeführt sind, die Öffnungen (18) ferner optional in einer oder mehreren parallelen Reihen angeordnet sind, vorzugsweise gegen die Längserstreckung der Stecker- und Aufnahmeschnittstelle (11, 11', 11"; 9, 9', 9") gekippt sind, und bei Abhängigkeit von Anspruch 4, die Reihen ferner optional senkrecht zur Halbierenden (16) des Zwischenwinkels (a) stehen; und/oder
bei Abhängigkeit von Anspruch 4, die Öffnungen (18) optional symmetrisch in Bezug auf die Halbierende (16) angeordnet sind; wobei
die Öffnungen (18) ferner optional in einem Bereich in der Nähe des Schnittpunktes (15, 15', 15") angeordnet sind.

11. Modularer Behälter (1, 2) nach einem oder mehreren der Ansprüche 1 bis 10, wobei eine Trennwand oder mehrere der Trennwände (1a, 1b, 1c; 2a, 2b, 2c), insbesondere jede der Trennwände (1a, 1b, 1c; 2a, 2b, 2c), umfasst:
einen Wandabschnitt (8), der im zusammengesetzten Zustand der Trennwände (1a, 1b, 1c; 2a, 2b, 2c) eine Seitenwand des Behälters (1, 2) definiert, wobei die Stecker- und Aufnahmeschnittstellen (11, 11', 11"; 9, 9', 9") optional an den äußeren Ecken (12) des Wandabschnitts (8) ausgeführt sind, wobei
der Wandabschnitt (8) optional die Form eines im Wesentlichen gleichseitigen Dreiecks mit einer zugehörigen Dreiecksspitze (15, 15', 15") aufweist, die mit dem Schnittpunkt (15, 15', 15") zusammenfällt, wobei
die Stecker- und Steckerschnittstellen (11, 11', 11"; 9, 9', 9") vorzugsweise so ausgeführt sind, dass sie sich entlang der von der Dreiecksspitze (15, 15', 15") ausgehenden Dreiecksschenkel erstrecken.

12. Modularer Behälter (1, 2) nach einem oder mehreren der Ansprüche 1 bis 11, wobei der Sockelabschnitt (7) nachfolgend zur Aufnahmeschnittstelle (9, 9', 9") ausgeführt wird,
wobei
bei Abhängigkeit von Anspruch 10, der Sockelabschnitt (7) optional so ausgeführt ist, dass er sich einstückig von dem zugehörigen Wandabschnitt (8) erstreckt, so dass die Aufnahmeschnittstelle (9, 9', 9") zwischen dem Wandabschnitt (8) und dem Sockelabschnitt (7) angeordnet ist.

13. Modularer Behälter (1, 2) nach einem oder mehreren der Ansprüche 1 bis 12, wobei,
eine Trennwand oder mehrere der Trennwände (2a, 2b, 2c), vorzugsweise alle Trennwände (2a, 2b, 2c), auf einer dem Schnittpunkt (15, 15', 15") abgewandten Stirnseite eine oder mehrere, vorzugsweise symmetrisch zur Halbierenden (16) zwischen der ersten und zweiten Verriegelungsachse (14, 10) angeordnete Aussparung/en (4) umfasst, und die zur rutschsicheren Aufnahme von zumindest Randabschnitten einer oberen Platte, eines Bodens (1d) oder eines Gitters (2d) ausgebildet sind; und/oder wobei
mit Ausnahme der Stecker- und Aufnahmeschnittstellen (11, 11', 11"; 9, 9', 9") alle Trennwände (1a, 1b, 1c; 2a, 2b, 2c) in Bezug auf eine Draufsicht die gleiche Grundfläche aufweisen.

14. Modularer Behälter (1, 2) nach einem oder mehreren der Ansprüche 1 bis 13, wobei der modulare Behälter (1, 2) im zusammengesetzten Zustand drei Trennwände (1a, 1b, 1c, 2a, 2b, 2c) umfasst, so dass der Hohlraum (3) eine inverse, insbesondere regelmäßige Tetraederform aufweist.

15. Montage-Bausatz (1a, 1b, 1c, 1d; 2a, 2b, 2c, 2d) zum Zusammensetzen eines modularen Behälters (1, 2) nach einem oder mehreren der Ansprüche 1 bis 14, wobei der Montage-Bausatz (1a, 1b, 1c, 1d; 2a, 2b, 2c, 2d) als Montage-Bausatz-Elemente mindestens drei Trennwände (1a, 1b, 1c; 2a, 2b, 2c) wie in Anspruch 1 definiert umfasst, und optional mindestens eine oder mehrere Deckplatte/n, mindestens einen Boden, und mindestens ein Gitter (2d), insbesondere Grillrost (2d) und/oder Aschegitter (2d) nach Anspruch 14 umfasst.

## Revendications

1. Pot modulaire (1, 2), en particulier un creuset (2), un pot à gril (2) ou décoratif (1), comprenant :
au moins trois cloisons (1a, 1b, 1c ; 2a, 2b, 2c) interconnectables l'une à l'autre par des connexions de verrouillage par glissement ; dans lequel
les cloisons (1a, 1b, 1c; 2a, 2b, 2c) ont sensiblement la même forme de base et de préférence sont de forme plane,
chaque cloison (1a, 1b, 1c; 2a, 2b, 2c) comprenant une interface mâle de verrouillage par glissement (11) comportant une ou plusieurs pattes formant crochet mâles (11a, 11b), et une interface femelle de verrouillage par glissement (9) comportant une ou plusieurs fentes de verrouillage femelle homologues (9a, 9b) pour verrouiller des pattes formant crochet (11a, 11b) dans celles-ci dans un mouvement de glissement pour verrouiller,
dans lequel avec chaque cloison (1a, 1b, 1c, 2a, 2b, 2c), les une ou plusieurs pattes formant crochet (11a, 11b) de l'interface mâle (11) sont agencées suivant un premier axe de verrouillage respectif (14), et les une ou plusieurs fentes (9a, 9b) de chaque interface femelle (9) sont agencées suivant un second axe de verrouillage respectif (10), de manière que les premier et second axes de verrouillage (14, 10) de chaque cloison (1a, 1b, 1c, 2a, 2b, 2c) aient un point d'intersection commun (15), et dans lequel
des ouvertures de crochet des pattes formant crochet (11"a, 11"b) de l'interface mâle (11") d'une des cloisons (1c, 2c) sont orientées vers le point d'intersection associé (15"), alors que des ouvertures de crochet des pattes formant crochet (11a, 11b; 11'a, 11'b) de l'interface mâle (11, 11') des autres cloisons (1a, 1b, 2a,2b) sont orientées en s'éloignant de leur point d'intersection associé (15, 15'),
dans lequel les cloisons (1a, 1b, 1c ; 2a, 2b, 2c), dans l'état assemblé, définissent une cavité (3),
**caractérisé en ce que**
une ou plusieurs des cloisons (1a, 1b, 1c; 2a, 2b, 2c), en particulier chacune des cloisons (1a, 1b, 1c ; 2a, 2b, 2c), comprend :
une section de base (7) pour supporter le pot (1, 2) dans l'état assemblé contre le sol, dans lequel,
la section de base (7) s'étendant à l'opposé de l'interface femelle (9, 9', 9") dans une direction inclinée par rapport ou essentiellement parallèle à la bissectrice (16) des premier et second axes de verrouillage (14, 10) traversant la cloison associée (1a, 1b, 1c), de manière que l'extrémité libre de la section de base (7) et le point d'intersection (15, 15', 15") soient situés du même côté de la cloison (1a, 1b, 1c),
dans lequel la section de base (7) est mise en œuvre pour s'étendre au-delà du point d'intersection (15, 15', 15") de manière que la hauteur (H1) de la base (7) s'étendant au-delà du point d'intersection (15, 15', 15") et mesurée parallèlement à la bissectrice (16) des premier et second axes de verrouillage (14, 10) s'élève d'un tiers à la moitié de la hauteur totale de la cloison (H2) mesurée parallèlement à la bissectrice (16).

2. Pot modulaire (1, 2) selon la revendication 1, le pot modulaire (1, 2) comprend une ou plusieurs parmi au moins une plaque supérieure, au moins une tablette (1d) et au moins une grille (2d), dimensionnée de manière à être adaptée pour être insérée dans la cavité (3) à un niveau prédéfini par rapport au point d'intersection (15, 15', 15"), le niveau étant mesuré parallèlement à la bissectrice (16) entre les premier et second axes de verrouillage (14, 10) ; et/ou pour être placée, dans l'état assemblé, sur un côté supérieur du pot (2), le côté supérieur étant écarté du point d'intersection (15, 15', 15") ; dans lequel
au moins une parmi la plaque supérieure, la tablette (1d) et/ou la grille (2d) est mise en œuvre de manière que, dans un premier alignement par rapport à une orientation donnée du pot modulaire assemblé (2), l'au moins une plaque supérieure, tablette (1d) et/ou grille (2d) s'ajuste dans la cavité (3) à un ou au niveau prédéfini, et dans un second alignement par rapport à l'orientation donnée du pot modulaire assemblé (2), l'au moins une plaque supérieure, tablette (1d) et/ou grille (2d) pouvant être placée sur le côté supérieur du pot modulaire assemblé (2), dans lequel, dans le cas où la cavité (3) a une forme de tétraèdre, en particulier régulier, inverse, au moins une de la plaque supérieure, la tablette (1d) et/ou la grille (2d) a éventuellement une empreinte triangulaire équilatérale.

3. Pot modulaire (1, 2) selon une ou plusieurs des revendications 1 et 2, dans lequel les interfaces mâle (11) et femelle (9) de chacune des cloisons (1a, 1b, 1c, 2a, 2b, 2c) sont configurées de manière que :
chaque interface mâle (11) d'une des cloisons (1a, 1b, 1c, 2a, 2b, 2c) soit attribuée pour être inter-verrouillée avec une interface femelle particulière (9) d'une des cloisons restantes (1a, 1b, 1c, 2a, 2b, 2c) de la pluralité de cloisons (1a, 1b, 1c, 2a, 2b, 2c) ; et/ou
les pattes format crochet mâles (11a, 11b) font saillie à partir d'un côté frontal (12) de la cloison associée (1a, 1b, 1c, 2a, 2b, 2c) ; et/ou
les pattes format crochet mâles (11a, 11b) sont mises en œuvre dans un agencement coplanaire avec la cloison associée (1a, 1b, 1c ; 2a, 2b, 2c) ; et/ou
les fentes de verrouillage femelles (9a, 9b) sont mises en œuvre comme des fentes longitudinales s'étendant sensiblement parallèlement au second axe de verrouillage (10), dans lequel une ou plusieurs des fentes de verrouillage femelles (9a, 9b) sont mises en œuvre comme des fentes fermées des deux côtés, et/ou dans lequel une ou plusieurs des fentes de verrouillage femelles (9a, 9b) sont mises en œuvre comme des fentes ouvertes d'un côté ; dans lequel chaque interface de verrouillage femelle (9, 9', 9") comprend éventuellement une ou plusieurs, en particulier exactement une, fentes de verrouillage ouvertes d'un côté et une ou plusieurs, en particulier exactement une, fentes de verrouillage fermées des deux côtés.

4. Pot modulaire (1, 2) selon une ou plusieurs des revendications 1 et 3, dans lequel les interfaces de verrouillage par glissement (9, 9', 9" ; 11, 11', 11") d'une ou plusieurs des cloisons (1a, 1b, 1c, 2a, 2b, 2c), éventuellement de toutes les cloisons (1a, 1b, 1c, 2a, 2b, 2c), sont mises en œuvre de manière que :
pour chacune des une ou plusieurs cloisons (1a, 1b, 1c, 2a, 2b, 2c), le point d'intersection (15) se situe sur le bord ou à l'intérieur de la circonférence de la cloison correspondante (1a, 1b, 1c, 2a, 2b, 2c).

5. Pot modulaire (1, 2) selon une ou plusieurs des revendications 1 à 4, dans lequel un angle intermédiaire (a) entre le second axe de verrouillage (10) et le premier axe de verrouillage (14), par rapport à une vue en plan dans laquelle l'interface mâle (11) est située sur le côté gauche et un système de coordonnées gauche comme référence, se trouve dans la plage de 30° à 130.

6. Pot modulaire (1, 2) selon une ou plusieurs des revendications 1 à 5, dans lequel, avec l'une cloison (1c) qui comprend des pattes formant crochet (11"a, 11"b) avec des ouvertures de crochet orientées vers le point d'intersection associé (15"),
une patte formant crochet mâle particulière (11"a) des pattes formant crochet mâles (11a, 11b, 11'a, 11'b, 11"a, 11"b) qui est située proche, en particulier la plus proche, du point d'intersection associé (15") a un angle d'ouverture de patte formant crochet (b) d'environ 15° à 80°, de préférence d'environ 60°, éventuellement, quand elle dépend de la revendication 4, ayant la moitié de la taille de l'angle intermédiaire (a).

7. Pot modulaire (1, 2) selon une ou plusieurs des revendications 1 à 6, dans lequel, avec l'une cloison (1c) qui comprend des pattes formant crochet (11"a, 11"b) avec des ouvertures de crochet orientées vers le point d'intersection associé (15"),
une fente de verrouillage femelle particulière (11"a) des fentes de verrouillage femelles (11"a, 11"b) qui est située proche, en particulier la plus proche, du point d'intersection associé (15") est une fente ouverte d'un côté ayant une ouverture de fente faisant face au point d'intersection associé (15") et ayant un angle d'ouverture de fente (b) d'environ 15° à 80°, de préférence d'environ 60°, éventuellement, quand elle dépend de la revendication 4, ayant la moitié de la taille de l'angle intermédiaire (a).

8. Pot modulaire (1, 2) selon la revendication 6 et 7, dans lequel :l'angle d'ouverture de patte formant crochet (b) et l'angle d'ouverture de fente (b) ont essentiellement les mêmes valeurs absolues ; et/ou quand elle dépend de la revendication 4, la patte formant crochet mâle particulière (11"a) et la fente de verrouillage femelle particulière (9"a) sont éventuellement agencées symétriquement par rapport à la bissectrice (16) de l'angle intermédiaire (a) ; et en outre ont éventuellement un design symétrique par rapport à la bissectrice (16).

9. Pot modulaire (1, 2) selon une ou plusieurs des revendications 5 et 6, et la revendication 7, dans lequel, avec la cloison associée à la patte formant crochet particulière (11"a) et la fente de verrouillage particulière (9"a), une section particulière (17) de la cloison (1c) s'étend dans l'espace entre la patte formant crochet particulière (11"a) et la fente de verrouillage particulière (9"a), la section particulière (17) ayant éventuellement une forme triangulaire et étant agencée symétriquement entre la patte formant crochet particulière (11"a) et la fente de verrouillage particulière (9"a), dans lequel en outre éventuellement un sommet (15") de la section particulière (17), en particulier la section particulière de forme triangulaire (17), coïncide avec le point d'intersection associé (15").

10. Pot modulaire (2) selon une ou plusieurs des revendications 1 à 9, dans lequel
au moins une des cloisons (2a, 2b, 2c), de préférence chacune des cloisons (2a, 2b, 2c), comprend, dans la région entre l'interface mâle de verrouillage par glissement (11, 11', 11") et l'interface femelle de verrouillage par glissement (9, 9', 9"), une pluralité d'ouvertures d'évent ou de ventilation (18), les ouvertures (18) étant mises en œuvre éventuellement comme deux fentes fermées des deux côtés,
les ouvertures (18) étant agencées en outre éventuellement dans une ou plusieurs rangées parallèles, de préférence inclinées par rapport à l'extension longitudinale des interfaces mâle et femelle (11, 11', 11"; 9, 9', 9"), et, quand elle dépend de la revendication 4, les rangées étant en outre éventuellement perpendiculaires à la bissectrice (16) de l'angle intermédiaire (a) ; et/ou,
quand elle dépend de la revendication 4, les ouvertures (18) étant agencées en outre éventuellement symétriquement par rapport à la bissectrice (16) ; dans lequel les ouvertures (18) étant situées encore en outre éventuellement dans une région proche du point d'intersection (15, 15', 15").

11. Pot modulaire (1, 2) selon une ou plusieurs des revendications 1 à 10, dans lequel une ou plusieurs des cloisons (1a, 1b, 1c ; 2a, 2b, 2c), en particulier chacune des cloisons (1a, 1b, 1c ; 2a, 2b, 2c) comprend :
une section de paroi (8) définissant dans l'état assemblé des cloisons (1a, 1b, 1c ; 2a, 2b, 2c) une paroi latérale du pot (1, 2), les interfaces mâle et femelle (11, 11', 11" ; 9, 9', 9") étant éventuellement mises en œuvre au niveau des bords extérieurs (12) de la section de paroi (8), dans lequel
la section de paroi (8) a éventuellement la forme d'un triangle sensiblement équilatéral ayant un sommet de triangle associé (15, 15', 15") coïncidant avec le point d'intersection (15, 15', 15"), dans lequel
les interfaces mâle et femelle (11, 11', 11" ; 9, 9', 9") mises en œuvre de préférence pour s'étendre suivant les branches du triangle provenant du sommet du triangle (15, 15', 15").

12. Pot modulaire (1, 2) selon une ou plusieurs des revendications 1 à 11, dans lequel
la section de base (7) est mise en œuvre subséquemment à l'interface femelle (9, 9', 9"), dans lequel quand elle dépend de la revendication 10, la section de base (7) est éventuellement mise en œuvre de manière qu'elle s'étende dans une configuration d'une seule pièce à partir de la section de paroi associée (8), de manière que l'interface femelle (9, 9', 9") soit agencée entre la section de paroi (8) et la section de base (7).

13. Pot modulaire (1, 2) selon une ou plusieurs des revendications 1 à 12, dans lequel,
une ou plusieurs des cloisons (2a, 2b, 2c), de préférence toutes les cloisons (2a, 2b, 2c), comprend, sur un côté frontal écarté par rapport au point d'intersection (15, 15', 15"), un ou plusieurs évidements (4), de préférence agencés symétriquement par rapport à la bissectrice (16) entre les premier et second axes de verrouillage (14, 10), et configurés pour accueillir au moins des sections de bord d'une plaque supérieure, d'une tablette (1d), ou d'une grille (2d) d'une manière anti-glissement ; et/ou dans lequel sauf pour les interfaces mâle et femelle (11, 11', 11" ; 9, 9', 9"), toutes les cloisons (1a, 1b, 1c ; 2a, 2b, 2c) ont la même empreinte par rapport à une vue en plan.

14. Pot modulaire (1, 2) selon une ou plusieurs des revendications 1 à 13, dans lequel le pot modulaire (1, 2) dans l'état assemblé comprend trois cloisons (1a, 1b, 1c, 2a, 2b, 2c) de manière que la cavité (3) ait une forme de tétraèdre inverse, en particulier régulier.

15. Kit d'assemblage (1a, 1b, 1c, 1d ; 2a, 2b, 2c, 2d) pour assembler un pot modulaire (1, 2) selon une ou plusieurs des revendications 1 à 14, le kit d'assemblage (1a, 1b, 1c, 1d ; 2a, 2b, 2c, 2d) comprenant comme éléments de kit d'assemblage au moins trois cloisons (1a, 1b, 1c; 2a, 2b, 2c) telles que définies dans la revendication 1, et éventuellement comprenant une ou plusieurs parmi au moins une plaque supérieure, au moins une tablette (1d), et au moins une grille (2d), en particulier une grille à griller (2d) et/ou une grille à cendres (2d), selon la revendication 14.
